# EUROPEAN PATENT SPECIFICATION

(11) **EP 3 112 880 B1**
(45) Date of publication and mention of the grant of the patent: **20.06.2018**
(21) Application number: 16176950.0
(22) Date of filing: 29.06.2016
(51) Int. Cl.: G01P 21/00, G01L 25/00

(54) **MEMS SENSOR DEVICES HAVING A SELF-TEST MODE**
MEMS-SENSORVORRICHTUNGEN MIT EINEM SELBST-TEST-MODUS
DISPOSITIFS MEMS-CAPTEURS AYANT UN MODE AUTO-TEST

(30) Priority: 30.06.2015 WO PCT/IB2015/001341
(43) Date of publication of application: 04.01.2017
(73) Proprietor: NXP USA, Inc., Austin TX 78735 (US)
(72) Inventor: Enjalbert, Jerome Romain, 5656 AG Eindhoven (NL); Kniffin, Margaret Leslie, 5656 AG Eindhoven (NL); McNeil, Andrew C, 5656 AG Eindhoven (NL)
(74) Representative: Freescale law department - EMEA patent ops

(56) References cited:
- US-A- 5 373 722
- US-A- 5 731 520
- US-A1- 2013 162 365
- US-B1- 6 501 282

## Description

### Field of the invention

This invention relates to micro-electro-mechanical system (MEMS) devices, such as compact MEMS accelerometer devices, which have a self-test mode.

### Background of the invention

MEMS devices typically include components between 1 to 100 micrometers in size (i.e. 0.001 to 0.1 mm), and generally range in size from 20 micrometers (0.02 mm) to a millimeter. A MEMS device may consist of several components that interact with the surroundings such as microsensors. Examples of such microsensors are acceleration sensors which typically include a mass which is movable, relative to a body of the device, under the influence of an acceleration. MEMS acceleration sensors typically include capacitors constituted by cooperating pairs of surfaces, one surface of each pair being located on a movable body and the other surface of each pair being located on the body of the sensor. The movement due to the acceleration may, depending on its direction, result in a change in the capacitance values of the capacitors. This change in capacitance values can, in some types of acceleration sensors, be determined by applying excitation voltages to the capacitors and measuring any currents flowing into the movable mass.

MEMS sensors are increasingly miniaturised. To save space, the terminals of the sensors may have a dual use, serving both as excitation terminals and as test terminals. Excitation terminals serve to supply excitation voltages to the sensor which allow a desired parameter to be sensed or measured. Test terminals serve to supply test voltages to test the sensor. In some sensors, such as differential acceleration sensors in which pairs of movable bodies are capable of moving in the same direction and in opposite directions, a straightforward dual use of the terminals is not possible due to the symmetry of the sensor arrangement, which typically produces no output signal when the movable bodies are moving in opposite directions during a test.
US 2013/162365 A1 for instance describes a calibration circuit for a shock sensor. The calibration circuit includes multiple switches and capacitors. The switches are set to an ON or OFF state depending on whether the calibration circuit is operating in calibration mode or in sensing mode. A first switch is coupled to a first side of the shock sensor and, when closed, also is coupled to a negative input of an amplifier. A second switch is coupled to a second, opposite side of the shock sensor and, when closed, also is coupled to a positive input of the amplifier. A third switch is coupled to the first side of the shock sensor and is part of the control circuit. A fourth switch is coupled to the second side of the shock sensor and also is coupled to ground. A fifth switch is coupled to a capacitor and to an output of the amplifier through a resistor. The resistors in calibration circuit have predetermined resistance values and are in addition to the inherent resistance included in wiring connections between circuit components. During calibration mode, the third and fourth switches are ON (i.e., closed), whereas other switches are OFF (i.e., open). In contrast, when the calibration circuit is in sensing mode, the other switches are ON (i.e., closed) and third and fourth switches are OFF (i.e., open).

### Summary

According to a first aspect of the present disclosure, there is provided a micro-electro-mechanical system (MEMS) device comprising: a MEMS sensor; a detector circuit; a controller circuit coupled with the MEMS sensor; a first connection coupled to a first output of the MEMS sensor and a first input of the detector circuit; a second connection coupled to a second output of the MEMS sensor and a second input of the detector circuit; and a first switch arranged in the first connection, and configured to be controlled by the controller circuit, wherein the controller circuit is configured to open the first switch during a first test mode so as to connect only a single input of the detector circuit with an output of the MEMS sensor.

The MEMS device may further comprise: a second switch arranged in the second connection, wherein the controller circuit is further configured to close the second switch during the first test mode. The controller circuit may be further configured to: during a second test mode, close the first switch and open the second switch, wherein the first and the second test modes can alternatingly connect a single input of the detector circuit with an output the MEMS sensor. The MEMS device may further comprise: a third connection between the first output of the MEMS device and the second input of the detector circuit; and a third switch arranged in the third connection, and configured to be controlled by the controller circuit, wherein the controller circuit is configured to close the third switch during the first test mode so as to connect only a single input of the detector circuit with both outputs of the MEMS sensor.

The MEMS device may further comprise: a fourth connection between the second output of the MEMS sensor and the first input of the detector circuit; and a fourth switch arranged in the fourth connection, and configured to be controlled by the controller circuit, wherein the controller circuit is further configured to open the fourth switch during the first test mode so as to connect only a single input of the detector circuit with both outputs of the MEMS sensor. The controller circuit may be further configured to: during a second test mode, open the third switch and close the fourth switch, wherein the first and the second test modes can alternatingly connect only a single input of the detector circuit with both outputs of the MEMS sensor.

The MEMS device may further comprise: a fifth switch arranged between the first input of the detector circuit and a first capacitor connected to a reference voltage terminal, the fifth switch being configured to be controlled by the controller circuit; and a sixth switch arranged between the second input of the detector circuit and a second capacitor connected to the reference voltage terminal, the sixth switch being configured to be controlled by the controller circuit, wherein the controller circuit is configured to: during the first the test mode, open the fifth switch and close the sixth switch, and during a second test mode, close the fifth switch and open the sixth switch, so as to alternatingly connect one input, via a capacitor, to the reference voltage terminal. The controller circuit may be configured to supply to the MEMS sensor a first set of excitation voltages during a sensing mode and a second set of excitation voltages during the first test mode.

The controller circuit may be configured to supply to the MEMS sensor a first set of excitation voltages during a sensing mode and a second set of excitation voltages during a second test mode, and to during the second test mode, close the first switch and open the second switch, wherein the first and the second test modes can alternatingly connect a single input of the detector circuit with an output the MEMS sensor. The controller circuit may be configured to supply the first set of excitation voltages and the second set of excitation voltages to the same sensor terminals. The detector circuit may comprise a differential amplifier. The differential amplifier may have a double output. The MEMS sensor may be an acceleration sensor. The MEMS sensor may comprise an even number of movable masses. The MEMS sensor may comprise two movable masses per dimension.
According to a second aspect, there is provided a consumer device comprising: a micro-electro-mechanical system (MEMS) sensor; a detector circuit; a controller circuit coupled with the MEMS sensor; a first connection arranged between a first output of the MEMS sensor and a first input of the detector circuit; a second connection arranged between a second output of the MEMS sensor and a second input of the detector circuit; and a first switch arranged in the first connection; wherein the controller circuit is configured to open the first switch during a first test mode so as to connect only a single input of the detector circuit with an output of the MEMS sensor. The consumer device may further comprise an airbag.
According to a third aspect, there is provided a method of operating a micro-electro-mechanical system (MEMS) device, comprising opening, during a first test mode, a first switch between a first output of a MEMS sensor and a first input of a detector circuit so as to connect only a single input of the detector circuit with an output of the MEMS sensor; supplying, during said first test mode, a test excitation signal to excitation terminals of the MEMS sensor; and detecting, during said first test mode, any current flowing through said single input of the detector circuit.

The method may further comprise, closing, during a second test mode, the first switch; and opening, during said second test mode, the second switch; and supplying, during said second test mode, a test excitation signal to excitation terminals of the MEMS sensor; and detecting, during said second test mode, any current flowing through said single input of the detector circuit. The method may further comprise supplying, during a sensing mode, a sensing mode excitation signal to the excitation terminals of the MEMS sensor to which a test excitation signal was supplied during the first test mode.

### Brief description of the drawings

Further details, aspects and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals.
Figure 1 schematically shows an example of a differential MEMS acceleration sensor device in operation.
Figure 2 schematically shows an example of excitation voltages for a differential MEMS acceleration sensor.
Figure 3 schematically shows an example of a differential MEMS acceleration sensor device in a test mode.
Figure 4 schematically shows a first embodiment of a MEMS sensor device according to the invention.
Figure 5 schematically shows a second embodiment of a MEMS sensor device according to the invention.
Figure 6 schematically shows a third embodiment of a MEMS sensor device according to the invention.
Figure 7 schematically shows a fourth embodiment of a MEMS sensor device according to the invention.
Figure 8 schematically shows a fifth embodiment of a MEMS sensor device according to the invention.
Figure 9 schematically shows a first embodiment of a MEMS device operating method according to the invention.
Figure 10 schematically shows a second embodiment of a MEMS device operating method according to the invention.

### Detailed description of the preferred embodiments

As mentioned above, the terminals of MEMS sensors may have a dual use, serving both as excitation terminals and as test terminals, but the symmetry of the sensor can prevent an output signal being produced during a test. In embodiments of the invention, dual use of the terminals of differential MEMS sensors is made possible by reading the sensor values in an asymmetric manner. To this end, in embodiments of the invention switches can be used which in a test mode connect only a single input of the detector circuit with an output of the MEMS sensor. In embodiments of the invention, at least one further switch in a cross-connection can be used to connect only a single input of the detector circuit with two outputs of the MEMS sensor, so as to increase the sensitivity of the MEMS device.

In the following, for sake of understanding, the circuitry is described in operation. However, it will be apparent that the respective elements are arranged to perform the functions being described as performed by them.

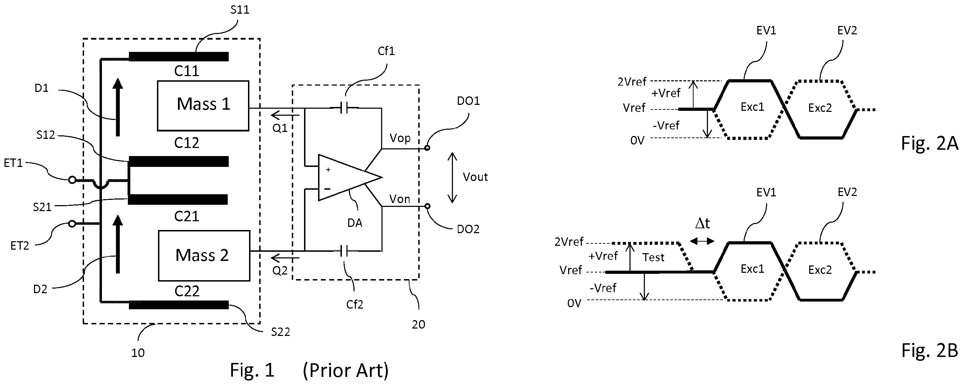

A MEMS sensor device according to the Prior Art is schematically illustrated in Fig. 1. The device of Fig. 1 includes a sensor unit 10 and a detector unit 20. The sensor unit 10 includes a first movable mass labelled Mass 1 and a second movable mass labelled Mass 2. Each movable mass is arranged between two stationary plates: the first mass between plates S11 and S12, and the second mass between plates S21 and S22. Each plate is spaced apart from and faces a surface of a mass so as to constitute a capacitor C11, C12, C21 and C22 respectively. As the capacitance of a capacitor varies with the distance between its surfaces, a change in capacitance can represent a movement of the mass and hence an acceleration.

The masses are capable of moving, under the influence of acceleration, along at least one axis. In the example shown in Fig. 1, both masses move, due to acceleration, in the directions D1 and D2 respectively. It can be seen that in the present example, these directions are identical. It is noted that the arrangement shown in Fig. 1 is configured for detecting or measuring acceleration in one dimension only, for example the vertical direction (Y-axis). With two such arrangements, acceleration can be detected or measured in two dimensions, for example the horizontal and the vertical direction (X-axis and Y-axis). A further third arrangement (which need not be identical to the first two arrangements) allows acceleration to be detected in all three dimensions.

The inner plates S12 and S21 are connected to a first excitation terminal ET1 while the outer plates S11 and S22 are electrically connected to a second excitation terminal ET2. To these terminals, excitation voltages can be applied as illustrated in Fig. 2A. The excitation voltages serve to produce electrical currents corresponding to any displacement of electric charges due to capacitance changes. These currents (corresponding with the displacement of electric charges Q1 and Q2 in Fig. 1) can be detected by the detector unit 20 and be converted into an output voltage Vout indicative of the acceleration.

In the example of Fig. 2A, excitation voltages EV1 and EV2 equal to a reference voltage Vref are normally applied to the excitation or input terminals ET1 and ET2 respectively. In some applications, the voltage Vref may be 0.8 V or 1.0 V, but this will depend on the particular MEMS sensor. The movable masses Mass 1 and Mass 2 are normally also at the reference voltage Vref due to their connections with the detector unit 20. In some embodiments, the detector unit 20 may include additional components, such as resistors, for causing the input terminals of the detector and hence the masses to normally be at a voltage equal to the reference voltage Vref.

During an excitation phase, the first excitation voltage EV1 (indicated by the uninterrupted line), initially increases to 2 x Vref while the second excitation voltage EV2 (indicated by an interrupted line) decreases to zero, thus creating a voltage difference of 2 x Vref over the input terminals ET1 and ET2. This voltage difference will charge the capacitors C11, C12, C21 and C22. In the absence of acceleration, the capacitances of capacitors C11 and C12, for example, will be approximately equal, and the current flowing through capacitor C11 will be approximately equal to the current flowing through capacitor C12. In the presence of acceleration, however, the first movable mass will move, for example in the direction D1 indicated in Fig. 1. Due to this movement, the capacitance of capacitor C11 will increase (caused by the smaller distance between the plate S11 and Mass 1) while the capacitance of capacitor C12 will decrease (caused by the larger distance between the plate S12 and Mass 1). As a result, the current through capacitor C11 will be larger than the current through capacitor C12. This difference in current will be compensated by current flowing from the detector 20 into Mass 1, thus displacing an electrical charge Q1. As the second movable mass, when subject to acceleration, moves in the direction D2, which in the example of Fig. 1 is equal to the direction D1, a current corresponding with an electrical charge Q2 will flow into the second movable mass Mass 2.

In the example of Fig. 2A, the excitation phase includes a first excitation period Exc1 in which the first excitation voltage EV1 applied to the first excitation terminal ET1 is equal to 2Vref while the second excitation voltage EV2 applied to the second excitation terminal ET2 is equal to zero. The excitation phase can further include a second excitation period Exc2 is which the excitation voltages are reversed, the first excitation voltage EV1 being equal to zero and the second excitation voltage EV2 being equal to 2Vref. In this second excitation period, again in the presence of acceleration currents will flow due to charging and discharging of the capacitors. The reversion of the excitation voltages aids in removing measurement bias.

It is noted that the excitation phases shown in Fig. 2A are preceded by an idle phase in which the excitation voltages are constant and equal to Vref. In a typical embodiment, each excitation period may take approximately 10µs (microseconds), but longer or shorter excitation periods may also be used.

Any flow of current towards (or from) the masses can be detected by the detector circuit 20, which in the present example includes a differential amplifier DA having a dual output: a high output and a low output. Any voltage difference between these outputs constitutes the output voltage Vout which represents acceleration. In the absence of acceleration, the change in capacitance of each pair of capacitors (S11 & S12; S21 & S22) is zero, resulting in a zero output signal Vout.

The excitation terminals ET1 and ET2 also can be used as test electrodes for applying a test signal to the sensor. This dual use of the electrodes eliminates the need for separate test electrodes and thereby saves space in the MEMS sensor. To test the MEMS sensor, the excitation voltages EV1 and EV2 can be used in a test sequence, an example of which is schematically illustrated in Fig. 2B.

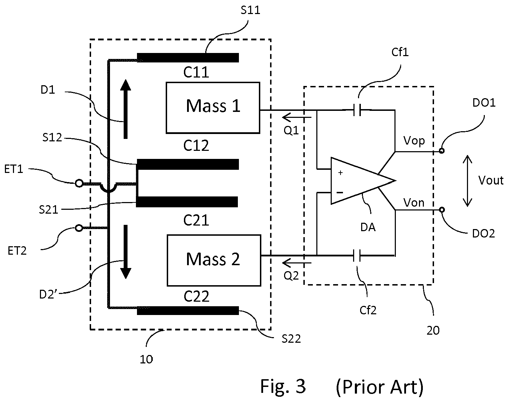

In the test sequence of Fig. 2B, excitation periods Exc1 and Exc2 are preceded by a test period. The first excitation period Exc1 is separated from the test period by an intermediate period in which the excitation voltages EV1 and EV2 are equal to the reference voltage Vref. The time duration Δt of this intermediate period may for example be 4 µs (microseconds). During the test period, the second excitation voltage EV2 is, in the present example, equal to twice the reference voltage, while the first excitation voltage EV1 is equal to Vref. This causes a voltage difference equal to Vref over the input terminals ET1 and ET2 and hence over the plate pairs S11-S12 and S22-S21, the plates S11 and S22 having a higher voltage (2.Vref) than the plates S12 and S21 (Vref). This will cause the masses to be attracted to the plates S11 and S22. As the masses have the same voltage (Vref) as the inner plates S12 and S21 which are connected to the first input terminal ET1, the masses will neither be attracted to nor be repulsed by these inner plates. Thus, due to the attraction to the outer plates S11 and S22 connected to the second input terminal ET2, the masses will move towards these outer plates. This is illustrated in the Prior Art arrangement of Fig. 3, where the plates are shown to move in opposite directions D1 and D2'.

The movement of the masses will cause the displacement of electrical charges Q1 and Q2 and will hence cause currents to flow, which should be detected by the detector circuit. However, as in a test phase the masses move in opposite directions, the currents flowing into each mass will be equal. As a result, the differential amplifier DA will fail to detect any change during the excitation periods of the test phase. As a result, testing a differential MEMS sensor device by using the excitation terminals as test electrodes yields no meaningful result unless additional measures are taken.

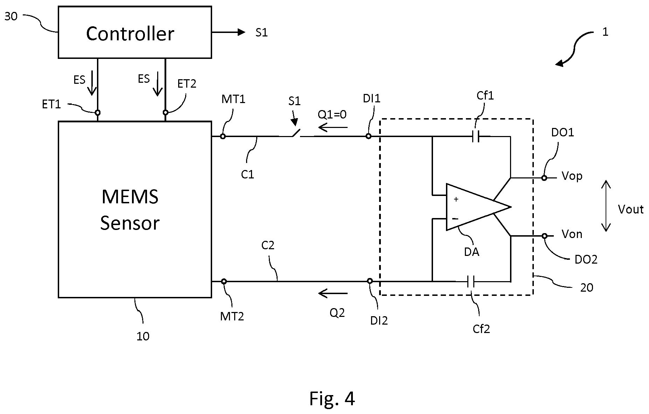

A MEMS sensor device according to an embodiment of the invention is schematically illustrated in Fig. 4. The exemplary MEMS sensor device 1 of Fig. 4 includes a MEMS sensor 10, a detector circuit 20 and a controller 30. The device 1 may contain further components which are, however, not shown in Fig. 4 for the sake of clarity of the illustration.

The MEMS sensor 10 may be a differential dual mass acceleration sensor as illustrated in Figs. 1 and 3 but the invention is not so limited. More in particular, the MEMS sensor may be an acceleration sensor having four or six masses, for example, or be a differential pressure sensor. The MEMS sensor includes a first excitation (or input) terminal ET1, a second excitation (or input) terminal ET2, a first mass (or output) terminal MT1 and a second mass (or output) terminal MT2. When the MEMS sensor is an acceleration sensor as illustrated in Figs. 1 and 3, the mass terminals can be connected to the movable masses. It is noted that the acceleration sensor illustrated in Figs. 1 and 3 can be realized in a small integrated circuit, as the acceleration sensor has only two excitation terminals (ET1 and ET2 in Figs. 1 and 3) and therefore only requires two connection pads on the integrated circuit. Such an acceleration sensor reduces both the number of electrical connections and the surface area of the integrated circuit, compared with acceleration sensors having a larger number of excitation terminals.

The detector circuit 10 of Fig. 4 includes a first detector input terminal DI1, a second detector input terminal DI2, a first detector output terminal DO1 and a second detector output terminal DO2. The detector circuit 20 can include a differential amplifier DA having a positive input and a negative input connected to the first detector input terminal and the second detector input terminal respectively. The differential amplifier DA has a dual output: a positive output connected with the first detector output DO1 and providing a positive output voltage Vop, and a negative output connected with the second detector output DO2 and providing a negative output voltage Von. The difference between the positive output voltage Vop and the negative output voltage Von can constitute the detector output voltage Vout. The detector circuit further includes a first feedback capacitor Cf1 arranged between the positive input and the positive output of the differential amplifier DA, and a second feedback capacitor Cf2 arranged between the negative input and the negative output of the differential amplifier DA. In addition to providing a feedback loop, these capacitors (which are not to be confused with the capacitors of the sensor) provide the electrical charges Q1 and Q2 which may be fed to the sensor 10. It is noted that the currents corresponding to the charges Q1 and Q2 may flow towards the sensor 10 and therefore away from the detector 20, or in the opposite direction. Still, the terminals DI1 and DI2 are labelled detector inputs as from a voltage point of view they constitute input terminals.

The controller 30 provides, in the embodiment shown, excitation signals ES to the excitation (or input) terminals ET1 and ET2 of the sensor 10. These excitation signals may correspond to those illustrated in Figs. 2A and 2B. In addition, the controller provides, in the embodiment shown, control signals to the switch S1, which will be explained below (for the sake of clarity of the illustration, the connection between the controller 30 and the switch S1 is indicated by means of an arrow only). In some embodiments, two separate controllers may be provided, one for supplying excitation signals and one for supplying switch control signals. In the embodiment shown in Fig. 4, a single integrated controller is shown.

A first connection C1 is shown to connect the first mass (or output) terminal MT1 of the MEMS sensor 10 with the first detector input DI1. Similarly, a second connection C2 is shown to connect the second mass (or output) terminal MT2 of the MEMS sensor 10 with the second detector input DI2. As explained with reference to Fig. 3, applying a test sequence of excitation voltages to a symmetrical sensor connected to a differential detector will typically produce no non-zero output voltage. In embodiments of the invention, therefore, only one input of the detector circuit is connected to the sensor. To this end, in the embodiment of Fig. 4 a (first) switch S1 is provided in the first connection C1 to disconnect the first input DI1 of the detector 20 from the sensor 10 during a test phase. When the switch S1 is open, as shown, current can flow through the second connection C2 only. As a result, only one input (in the present example: DI2) is connected to the MEMS sensor 10, more in particular, to the second output terminal MT2 of the MEMS sensor. In this manner, the detector 10 receives asymmetric input. Any displacement of electrical charges (Q2) will only be detectable at the second detector input DI2, as no current will flow at the first detector input DI1. The detector 20 will therefore, in response to a test sequence as illustrated in Fig. 2B, produce a non-zero output signal Vout. In contrast to the prior art, the asymmetrical arrangement of the present invention allows the excitation terminals ET1 and ET2 to be used as test terminals for testing, for example, an acceleration sensor having an even number of masses.

The switch S1 is open during a test phase only, for example when a sequence of test voltages as shown in Fig. 2B is applied. During normal operation of the device, which may also be referred to as sensing mode, the switch S1 is closed so that each input of the detector circuit 20 is connected to a corresponding output of the sensor 10. The controller 30 is configured for closing the switch S1 during normal operation, and for opening the switch when testing the sensor. In addition, the controller 30 produces regular excitation signals ES during normal operation and test excitation signals (for example having a test signal preceding the regular excitation signals as illustrated in Fig. 2B) during a test phase. The controller is further configured for synchronising the opening and closing of the switch with the production of suitable excitation signals.

In the embodiment of Fig. 4, the first connection C1 is provided with a switch so as to provide an interruptible connection between the sensor and the detector. It will be understood that a single switch (S1 in Fig. 4) may alternatively be accommodated in the second connection C2, the first connection C1 being permanent.

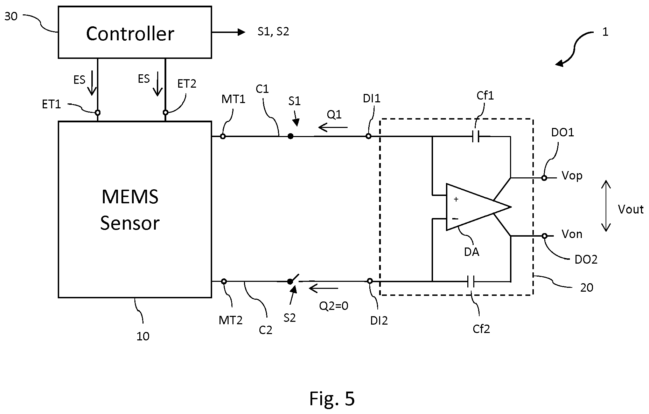

In the embodiment of Fig. 5, both connections C1 and C2 are provided with a switch. A first switch S1 is provided in the first connection C1, while a second switch S2 is provided in the second connection C2. This arrangement allows to alternatingly open one of the switches during a test phase, while closing both switches during normal operation. In the state shown in Fig. 5, switch 1 is closed, thus connecting the first output MT1 of the sensor with the first input DI1 of the detector circuit, while switch 2 is open, thus disconnecting the second output MT2 from the second input DI2.

It is noted that by closing the first switch S1, a first movable mass (for example Mass 1 in Figs. 1 and 3) can be tested, while by closing the second switch S2, a second movable mass (for example Mass 2 in Figs. 1 and 3) can be tested. This allows two masses to be tested independently.

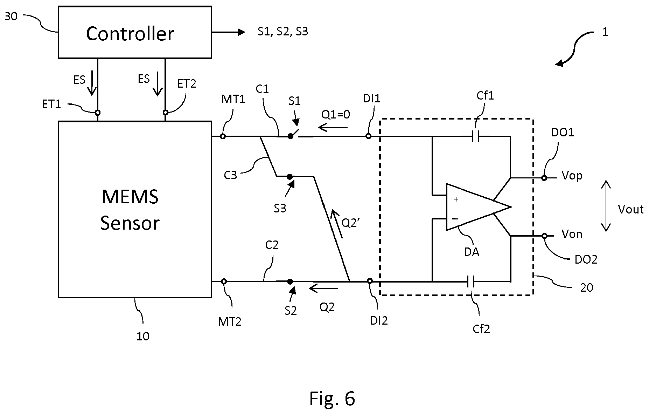

In the embodiment of Fig. 6, an additional connection C3 is provided between the first output (or MEMS terminal) MT1 of the sensor 10 and the second input (or detector input) DI2 of the detector 20. This cross-over connection C3, which is provided with a third switch S3, allows a single input of the detector circuit to be connected with both outputs of the sensor. In this way, both masses are connected with a single detector input, thus doubling the current that can flow during a test phase and thereby increasing the sensitivity and the accuracy of the test. In the test state shown in Fig. 6, the first switch S1 is open so as to disconnect the first detector input DI1, while the second switch S2 and the third switch S3 are closed to connect both sensor outputs MT1 and MT2 with the second detector input DI2. The addition of the third connection C3 allows additional electrical charge Q2' to reach the sensor. It will be understood that during normal (non-testing) operation of the arrangement of Fig. 6, switches S1 and S2 will be closed while switch S3 will be open. The switches S1, S2 and S3 can be operated by the controller 30.

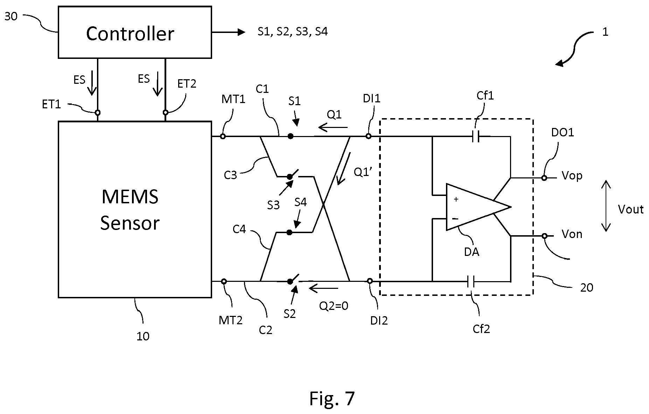

In the embodiment of Fig. 7, a fourth connection C4 is arranged between the second sensor output MT2 and the first detector input DI1. This fourth connection C4 is provided with a fourth switch S4 which is open during normal operation but can be closed to allow additional charge to reach the sensor. Typically, S4 will only be closed when S1 remains closed during the test phase. Similarly, only one of S3 and S4 will be closed during a test phase. As in the previous embodiments, the switches can all be controlled by the controller 30.

It can be seen that the cross-connections C3 and C4 and their associated switches S3 and S4 can also be used to invert the connections between the sensor 10 and the detector 30 during normal operation: by opening the first switch S1 and the second switch S2 and closing the third switch S3 and the fourth switch S4, the first sensor output MT1 is connected to the second detector input DI2, and vice versa. This allows a double measurement which enables to remove any offset of the detector circuit.

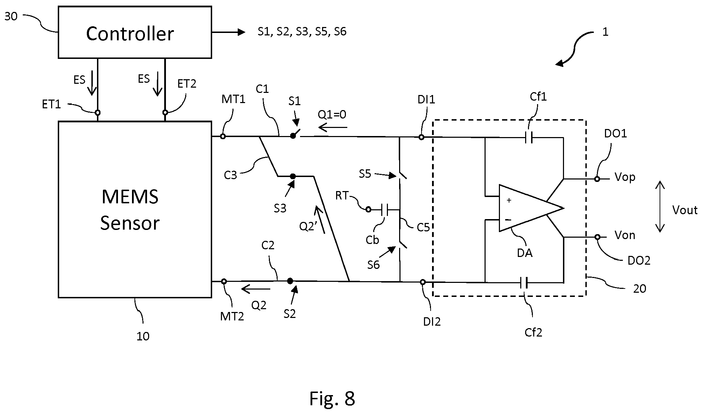

In the embodiment of Fig. 8, a balancing capacitor Cb is added to the configuration of Fig. 6 in order to minimise feedback factor mismatch and common mode noise conversion. The balancing capacitor is arranged between a reference terminal RT and an additional connection C5 which is in turn arranged between the detector input terminals DI1 and DI2. The additional connection C5 is provided with two switches S5 and S6 arranged in series, at least one of which should normally be open to prevent short-circuiting the detector inputs. By alternatingly closing one of the switches S5 and S6, one of the detector input terminals DI1 and DI2 can be connected with the capacitor Cb. The reference voltage Vref can be applied to the reference terminal RT.

The single balancing capacitor Cb may be replaced with two or more capacitors arranged in parallel, and further switches in the connection C5 may be used to connect one or more of these parallel capacitors with either or both of the detector input terminals.

It will be understood that combinations of the embodiments described above may be made without departing from the scope of the invention. For example, the embodiment of Fig. 7 having two cross-connections C3 and C4 may be combined with the capacitor arrangement of Fig. 8. Similarly, the capacitor arrangement of Fig. 8 may also be applied in the embodiment of Fig. 3.

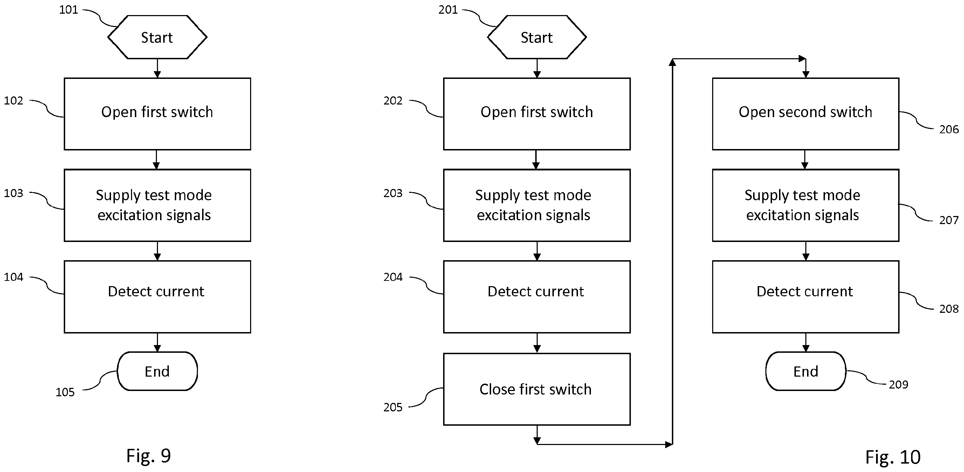

An exemplary embodiment of a method of operating a MEMS device in accordance with the invention is schematically illustrated in Fig. 9. The embodiment of Fig. 9 includes an initial step 101 ("Start"), followed by a step 102 in which a first switch in a connection between the MEMS device and a detector circuit is opened. The first switch of step 102 may correspond to the first switch S1 shown in Figs. 4 to 8, but may also correspond to the second switch S2 of Figs. 4 to 8, for example. In a third step 103, test mode excitation signals are supplied to the excitation terminals of the MEMS device, for example the excitation terminals ET1 and ET2 shown in Figs. 1 and 3. In a fourth step 104, any currents flowing into or from the MEMS device are detected by a detector circuit, for example the detector circuit 20 illustrated in Figs. 4 to 8. The method ends in a fifth step 105.

Another exemplary embodiment of a method of operating a MEMS device in accordance with the invention is schematically illustrated in Fig. 10. The embodiment of Fig. 10 includes an initial step 201 ("Start"), followed by a step 202 in which a first switch in a connection between the MEMS device and a detector circuit is opened. The first switch of step 202 can correspond to the first switch S1 shown in Figs. 4 to 8, but may also correspond to the second switch S2 of Figs. 4 to 8, for example. In a third step 203, test mode excitation signals are supplied to the excitation terminals of the MEMS device, for example the excitation terminals ET1 and ET2 shown in Figs. 1 and 3. In a fourth step 204, any currents flowing through the outputs of the MEMS device are detected by a detector circuit, for example the detector circuit 20 illustrated in Figs. 4 to 8.

In a fifth step 205, which terminates a first test mode, the first switch in closed. In a sixth step 206, which initiates a second test mode, a second switch is opened. The second switch of step 206 can correspond to the second switch S2 shown in Figs. 4 to 8, but may also correspond to the first switch S1 of Figs. 4 to 8, for example. In a seventh step 207, test mode excitation signals are supplied to the excitation terminals of the MEMS device, for example the excitation terminals ET1 and ET2 shown in Figs. 1 and 3. In an eighth step 208, any currents flowing through the outputs of the MEMS device are detected by a detector circuit, for example the detector circuit 20 illustrated in Figs. 4 to 8. The method ends in a ninth step 209. By using two test modes, a different switch being open in each test mode, the test can be carried out more accurately as any biases can be compensated.

It is noted that in embodiments of the present invention switches can be used to connect one or more movable masses with only one input of a detector circuit. In a typical embodiment, the masses remain electrically isolated from the excitation (or input) terminals of the sensor. In this way, both plates of each pair of plates associated with a mass can be used to attract or repel the mass.

In embodiments of the present invention the MEMS sensor 10 can be an acceleration sensor, such as the acceleration sensor illustrated in Figs. 1 and 3. This type of acceleration sensor has the advantage of including only two excitation terminals, thus reducing the surface area required for connection pads and the number of electrical connections. In addition, the symmetrical design makes the sensor output during a self-test substantially insensitive to physical accelerations.

In other embodiments of the invention MEMS acceleration sensors or other MEMS sensors having more than two excitation terminals, for example four or eight excitation terminals, may be used.

Embodiments of the invention may be described as a micro-electro-mechanical system (MEMS) device including a micro-electro-mechanical system (MEMS) sensor, a detector circuit, a controller circuit coupled with the MEMS sensor, a first connection arranged between a first output of the MEMS sensor and a first input of the detector circuit, a second connection arranged between a second output of the MEMS sensor and a second input of the detector circuit, and a first switch arranged in the first connection, wherein the controller circuit is configured to open the first switch during a first test mode so as to connect only a single input of the detector circuit with an output of the MEMS sensor.

Further embodiments of the invention may be described as a MEMS device further including a second switch arranged in the second connection, wherein the controller circuit is further configured to close the second switch during the first test mode. The controller circuit may further be configured to during the first test mode, open the first switch and close the second switch, and during a second the test mode, close the first switch and open the second switch, so as to alternatingly connect a single input of the detector circuit with an output the MEMS sensor.

Embodiments of the invention provide a consumer device, such as an airbag, provided with a MEMS sensor device as described above. Further embodiments of the invention provide a method of operating a micro-electro-mechanical system (MEMS) device, including opening a first switch between a first output of a MEMS sensor and a first input of a detector circuit during a first test mode so as to connect only a single input of the detector circuit with an output of the MEMS sensor.

The controller function of embodiments of the present invention may be implemented in a computer program for running on a computer system, at least including code portions for performing steps of a method according to the invention when run on a programmable apparatus, such as a computer system or enabling a programmable apparatus to perform functions of a device or system according to the invention. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system. The computer program may be provided on a data carrier, such as a CD ROM or diskette, stored with data loadable in a memory of a computer system, the data representing the computer program. The data carrier may further be a data connection, such as a telephone cable or a wireless connection.

In the foregoing specification, the invention has been described with reference to specific examples of embodiments of the invention. It will, however, be evident that various modifications and changes may be made therein without departing from the scope of the invention as set forth in the appended claims. For example, the connections may be any type of connection suitable to transfer signals from or to the respective nodes, units or devices, for example via intermediate devices. Accordingly, unless implied or stated otherwise the connections may for example be direct connections or indirect connections.

Devices functionally forming separate devices may be integrated in a single physical device. Also, the units and circuits may be suitably combined in one or more semiconductor devices.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps than those listed in a claim. Furthermore, Furthermore, the terms "a" or "an," as used herein, are defined as one or as more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A micro-electro-mechanical system (MEMS) device comprising
a MEMS sensor (10);
a detector circuit (20);
a controller circuit (30) coupled with the MEMS sensor (10);
a first connection (C1) coupled to a first output (MT1) of the MEMS sensor (10) and a first input (DI1) of the detector circuit (20);
a second connection (C2) coupled to a second output (MT2) of the MEMS sensor (10) and a second input (DI2) of the detector circuit (20);
a first switch (S1) arranged in the first connection (C1), and
a second switch (S2) arranged in the second connection (C2),
wherein first switch (S1) and the second switch (S2) are configured to be controlled by the controller circuit (30),wherein the controller circuit (30) is configured
to open the first switch (S1) and to close the second switch (S2) during a first test mode, and
to close the first switch (S1) and to open the second switch (S2) during a second test mode,
so as to connect only a single input of the detector circuit (20) with an output of the MEMS sensor,
wherein the first and the second test modes alternatingly connect a single input of the detector circuit (20) with an output of the MEMS sensor (10).

2. The MEMS device according to claim 1, further comprising
a third connection (C3) between the first output (MT1) of the MEMS device and the second input (DI2) of the detector circuit (20); and
a third switch (S3) arranged in the third connection (C3), and configured to be controlled by the controller circuit (30),
wherein the controller circuit (30) is configured to close the third switch (S3) during the first test mode so as to connect only a single input of the detector circuit (20) with both outputs of the MEMS sensor (10).

3. The MEMS device according to claim 2, further comprising
a fourth connection (C4) between the second output (MT2) of the MEMS sensor (10) and the first input of the detector circuit (20); and
a fourth switch (S4) arranged in the fourth connection (C4), and configured to be controlled by the controller circuit (30),
wherein the controller circuit (30) is further configured to open the fourth switch (S4) during the first test mode so as to connect only a single input of the detector circuit (20) with both outputs of the MEMS sensor (10).

4. The MEMS device according to claim 3,
wherein the controller circuit (30) is further configured to open the third switch (S3) and to close the fourth switch (S4) during the second test mode,
wherein the first and the second test modes can alternatingly connect only a single input of the detector circuit (20) with both outputs of the MEMS sensor (10).

5. The MEMS device according to anyone of the claims 1 to 4, further comprising
a fifth switch (S5) arranged between the first input of the detector circuit (20) and a first capacitor connected to a reference voltage terminal (RT), the fifth switch (S5) being configured to be controlled by the controller circuit (30); and
a sixth switch (S6) arranged between the second input (DI2) of the detector circuit (20) and a second capacitor connected to the reference voltage terminal (RT), the sixth switch (S6) being configured to be controlled by the controller circuit (30),
wherein the controller circuit (30) is configured
to open the fifth switch (S5) and to close the sixth switch (S6) during the first the test mode, and
to close the fifth switch (S5) and to open the sixth switch (S6) during a second test mode,
so as to alternatingly connect one input, via a capacitor, to the reference voltage terminal (RT).

6. The MEMS device according to anyone of the claims 1 to 5, wherein the controller circuit (30) is configured to supply to the MEMS sensor (10) a first set of excitation voltages during a sensing mode and a second set of excitation voltages during the first test mode.

7. The MEMS device according to claim 6, wherein the controller circuit (30) is configured to supply to the MEMS sensor (10) the second set of excitation voltages during the second test mode.

8. The MEMS device according to claim 7, wherein the controller circuit (30) is configured to supply the first set of excitation voltages and the second set of excitation voltages to the same sensor terminals.

9. The MEMS device according to any one of the claims 1 to 8, wherein the detector circuit (20) comprises a differential amplifier (DA).

10. The MEMS device according to claim 9, wherein the differential amplifier (DA) has a double output.

11. The MEMS device according to any one of the claims 1 to 10, wherein the MEMS sensor (10) is an acceleration sensor.

12. The MEMS device according to claim 11, wherein the MEMS sensor (10) comprises an even number of movable masses.

13. The MEMS device according to claim 12, wherein the MEMS sensor (10) comprises two movable masses per dimension.

## Patentansprüche

1. Eine mikro-elektro-mechanisches System (MEMS) Vorrichtung aufweisend
einen MEMS Sensor (10);
einen Detektorschaltkreis (20);
einen Controllerschaltkreis (30), der mit dem MEMS Sensor (10) gekoppelt ist;
eine erste Verbindung (C1), die an einen ersten Ausgang (MT1) des MEMS Sensors (10) und einen ersten Eingang (DI1) des Detektorschaltkreises (20) gekoppelt ist;
eine zweite Verbindung (C2), die an einen zweiten Ausgang (MT2) des MEMS Sensors (10) und einen zweiten Eingang (DI2) des Detektorschaltkreises (20) gekoppelt ist;
einen ersten Schalter (S1), der in der ersten Verbindung (C1) angeordnet ist, und
einen zweiten Schalter (S2), der in der zweiten Verbindung (C2) angeordnet ist,
wobei der erste Schalter (S1) und der zweite Schalter (S2) konfiguriert sind, von dem Controllerschaltkreis (30) gesteuert zu werden, wobei der Controllerschaltkreis (30) konfiguriert ist,
zu öffnen den ersten Schalter (S1) und zu schließen den zweiten Schalter (S2) während eines ersten Testmodus und
zu schließen den ersten Schalter (S1) und zu öffnen den zweiten Schalter (S2) während eines zweiten Testmodus,
sodass nur ein einziger Eingang des Detektorschaltkreises (20) verbunden wird mit einem Ausgang des MEMS Sensors,
wobei der erste und der zweite Testmodus einen einzigen Eingang des Detektorschaltkreises (20) mit einem Ausgang des MEMS Sensors (10) alternierend verbinden.

2. Die MEMS Vorrichtung gemäß Anspruch 1, ferner aufweisend
eine dritte Verbindung (C3) zwischen dem ersten Ausgang (MT1) der MEMS Vorrichtung und dem zweiten Eingang (DI2) des Detektorschaltkreises (20); und
einen dritten Schalter (S3), der in der dritten Verbindung (C3) angeordnet ist und konfiguriert ist, von dem Controllerschaltkreis (30) gesteuert zu werden,
wobei der Controllerschaltkreis (30) konfiguriert ist, den dritten Schalter (S3) zu schließen während des ersten Testmodus, sodass nur ein einziger Eingang des Detektorschaltkreises (20) mit beiden Ausgängen des MEMS Sensors (10) verbunden wird.

3. Die MEMS Vorrichtung gemäß Anspruch 2, ferner aufweisend
eine vierte Verbindung (C4) zwischen dem zweiten Ausgang (MT2) des MEMS Sensors (10) und dem ersten Eingang des Detektorschaltkreises (20); und
einen vierten Schalter (S4), der angeordnet ist in der vierten Verbindung (C4) und konfiguriert ist, von dem Controllerschaltkreis (30) gesteuert zu werden,
wobei der Controllerschaltkreis (30) ferner konfiguriert ist, den vierten Schalter (S4) zu öffnen während des ersten Testmodus, sodass nur ein einziger Eingang des Detektorschaltkreises (20) mit beiden Ausgängen des MEMS Sensors (10) verbunden wird.

4. Die MEMS Vorrichtung gemäß Anspruch 3,
wobei der Controllerschaltkreis (30) ferner konfiguriert ist, den dritten Schalter (S3) zu öffnen und den vierten Schalter (S4) zu schließen während des zweiten Testmodus,
wobei der erste und der zweite Testmodus nur einen einzigen Eingang des Detektorschaltkreises (20) mit beiden Ausgängen des MEMS Sensors (10) alternierend verbinden können.

5. Die MEMS Vorrichtung gemäß einem der Ansprüche 1 bis 4, ferner aufweisend
einen fünften Schalter (S5), der angeordnet ist zwischen dem ersten Eingang des Detektorschaltkreises (20) und einem ersten Kondensator, der mit einem Referenzspannung Anschluss (RT) verbunden ist, wobei der fünfte Schalter (S5) konfiguriert ist, von dem Controllerschaltkreis (30) gesteuert zu werden; und
einen sechsten Schalter (S6), der angeordnet ist zwischen dem zweiten Eingang (DI2) des Detektorschaltkreises (20) und einem zweiten Kondensator, der mit dem Referenzspannung Anschluss (RT) verbunden ist, wobei der sechste Schalter (S6) konfiguriert ist, von dem Controllerschaltkreis (30) gesteuert zu werden,
wobei der Controllerschaltkreis (30) konfiguriert ist,
zu öffnen den fünften Schalter (S5) und zu schließen den sechsten Schalter (S6) während des ersten Testmodus und
zu schließen den fünften Schalter (S5) und zu öffnen den sechsten Schalter (S6) während eines zweiten Testmodus,
sodass ein Eingang über einen Kondensator mit dem Referenzspannung Anschluss (RT) alternierend verbunden wird.

6. Die MEMS Vorrichtung gemäß einem der Ansprüche 1 bis 5, wobei der Controllerschaltkreis (30) konfiguriert ist, den MEMS Sensor (10) zu versorgen mit einer ersten Menge von Anregungsspannungen während eines Abtastmodus und mit einer zweiten Menge von Anregungsspannungen während des ersten Testmodus.

7. Die MEMS Vorrichtung gemäß Anspruch 6, wobei der Controllerschaltkreis (30) konfiguriert ist, den MEMS Sensor (10) zu versorgen mit der zweiten Menge von Anregungsspannungen während des zweiten Testmodus.

8. Die MEMS Vorrichtung gemäß Anspruch 7, wobei der Controllerschaltkreis (30) konfiguriert ist, dieselben Sensoranschlüsse zu versorgen mit der ersten Menge von Anregungsspannungen und mit der zweiten Menge von Anregungsspannungen.

9. Die MEMS Vorrichtung gemäß einem der Ansprüche 1 bis 8, wobei der Detektorschaltkreis (20) einen Differentialverstärker (DA) aufweist.

10. Die MEMS Vorrichtung gemäß Anspruch 9, wobei der Differentialverstärker (DA) einen doppelten Ausgang hat.

11. Die MEMS Vorrichtung gemäß einem der Ansprüche 1 bis 10, wobei der MEMS Sensor (10) ein Beschleunigungssensor ist.

12. Die MEMS Vorrichtung gemäß Anspruch 11, wobei der MEMS Sensor (10) eine gerade Anzahl beweglicher Massen aufweist.

13. Die MEMS Vorrichtung gemäß Anspruch 12, wobei der MEMS Sensor (10) zwei bewegliche Massen pro Dimension aufweist.

## Revendications

1. Dispositif à microsystème électromécanique (MEMS) comprenant :
un capteur MEMS (10) ;
un circuit détecteur (20) ;
un circuit de commande (30) couplé au capteur MEMS (10) ;
une première connexion (C1) couplée à une première sortie (MT1) du capteur MEMS (10) et une première entrée (D11) du circuit détecteur (20) ;
une deuxième connexion (C2) couplée à une seconde sortie (MT2) du capteur MEMS (10) et une seconde entrée (D12) du circuit détecteur (20) ;
un premier commutateur (S1) agencé dans la première connexion (C1), et
un deuxième commutateur (S2) agencé dans la deuxième connexion (C2),
dans lequel le premier commutateur (S1) et le deuxième commutateur (S2) sont configurés pour être commandés par le circuit de commande (30),
dans lequel le circuit de commande (30) est configuré pour
ouvrir le premier commutateur (S1) et fermer le deuxième commutateur (S2) durant un premier mode d'essai, et
fermer le premier commutateur (S1) et ouvrir le deuxième commutateur (S2) durant un second mode d'essai,
de manière à ne connecter qu'une seule entrée du circuit détecteur (20) à une sortie du capteur MEMS,
dans lequel les premier et second modes d'essai connectent alternativement une seule entrée du circuit détecteur (20) à une sortie du capteur MEMS (10).

2. Dispositif MEMS selon la revendication 1, comprenant en outre
une troisième connexion (C3) entre la première sortie (MT1) du dispositif MEMS et la seconde entrée (D12) du circuit détecteur (20) ; et
un troisième commutateur (S3) agencé dans la troisième connexion (C3), et configuré pour être commandé par le circuit de commande (30),
dans lequel le circuit de commande (30) est configurer pour fermer le troisième commutateur (S3) durant le premier mode d'essai de manière à ne connecter qu'une seule entrée du circuit détecteur (20) aux deux sorties du capteur MEMS (10).

3. Dispositif MEMS selon la revendication 2, comprenant en outre
une quatrième connexion (C4) entre la seconde sortie (MT2) du dispositif MEMS et la première entrée du circuit détecteur (20) ; et
un quatrième commutateur (S4) agencé dans la quatrième connexion (C4), et configuré pour être commandé par le circuit de commande (30),
dans lequel le circuit de commande (30) est configuré en outre pour ouvrir le quatrième commutateur (S4) durant le premier mode d'essai de manière à ne connecter qu'une seule entrée du circuit détecteur (20) aux deux sorties du capteur MEMS (10).

4. Dispositif MEMS selon la revendication 3,
dans lequel le circuit de commande (30) est configuré en outre pour ouvrir le troisième commutateur (S3) et fermer le quatrième commutateur (S4) durant le second mode d'essai, dans lequel les premier et second modes d'essai peuvent connecter alternativement une seule entrée du circuit détecteur (20) aux deux sorties du capteur MEMS (10).

5. Dispositif MEMS selon l'une quelconque des revendications 1 à 4, comprenant en outre
un cinquième commutateur (S5) agencé entre la première entrée du circuit détecteur (20) et un premier condensateur connecté à une borne de tension de référence (RT), le cinquième commutateur (S5) étant configuré pour être commandé par le circuit de commande (30), et
un sixième commutateur (S6) agencé entre la seconde entrée (D12) du circuit détecteur (20) et un second condensateur connecté à une borne de tension de référence (RT), le sixième commutateur (S6) étant configuré pour être commandé par le circuit de commande (30),
dans lequel le circuit de commande (30) est configuré pour
ouvrir le cinquième commutateur (S5) et fermer le sixième commutateur (S6) durant le premier mode d'essai, et
fermer le cinquième commutateur (S5) et ouvrir le sixième commutateur (S6) durant un second mode d'essai,
de manière à connecter alternativement une seule entrée, par l'intermédiaire d'un condensateur, à la borne de référence (RT).

6. Dispositif MEMS selon l'une quelconque des revendications 1 à 5, dans lequel le circuit de commande (30) est configuré pour fournir au capteur MEMS (10) un premier ensemble de tensions d'excitation durant un mode de détection et un second ensemble de tensions d'excitation durant le premier mode d'essai.

7. Dispositif MEMS selon la revendication 6, dans lequel le circuit de commande (30) est configuré pour fournir au capteur MEMS (10) le second ensemble de tensions d'excitation durant le second mode d'essai.

8. Dispositif MEMS selon la revendication 7, dans lequel le circuit de commande (30) est configuré pour fournir le premier ensemble de tensions d'excitation et le second ensemble de tensions d'excitation aux mêmes bornes de capteur.

9. Dispositif MEMS selon l'une quelconque des revendications 1 à 8, dans lequel le circuit détecteur (20) comprend un amplificateur différentiel (DA).

10. Dispositif MEMS selon la revendication 9, dans lequel l'amplificateur différentiel (DA) a une double sortie.

11. Dispositif MEMS selon l'une quelconque des revendications 1 à 10, dans lequel le capteur MEMS (10) est un capteur d'accélération.

12. Dispositif MEMS selon la revendication 11, dans lequel le capteur MEMS (10) comprend un nombre pair de masses mobiles.

13. Dispositif MEMS selon la revendication 12, dans lequel le capteur MEMS (10) comprend deux masses mobiles par dimension.
